(19) Europäisches Patentamt

European Patent Office

Office européen des brevets

(11) **EP 0 617 794 B1**

(12) **EUROPEAN PATENT SPECIFICATION**

(45) Date of publication and mention
of the grant of the patent:
**17.03.1999 Bulletin 1999/11**

(21) Application number: **93900126.9**

(22) Date of filing: **16.12.1992**

(51) Int Cl.⁶: **G01S 5/14**, G01S 11/02,
A63B 57/00

(86) International application number:
**PCT/AU92/00667**

(87) International publication number:
**WO 93/12439 (24.06.1993 Gazette 1993/15)**

(54) **A DISTANCE MEASURING SYSTEM**

SYSTEM ZUR ENTFERNUNGSMESSUNG

SYSTEME DE MESURE DE DISTANCE

(84) Designated Contracting States:
**AT BE CH DE DK ES FR GB GR IE IT LI LU MC NL
PT SE**

(30) Priority: **16.12.1991 AU 34/91
07.04.1992 AU 1761/92**

(43) Date of publication of application:
**05.10.1994 Bulletin 1994/40**

(73) Proprietor: **PINRANGER (AUSTRALIA) PTY
LIMITED
North Sidney, NSW 2060 (AU)**

(72) Inventors:
• **GUNTHORPE, Thomas, Charles
Bowning, NSW 2582 (AU)**
• **THOMAS, Graham, Wayne
Neutral Bay, NSW 2089 (AU)**

(74) Representative: **Whalley, Kevin
MARKS & CLERK,
57-60 Lincoln's Inn Fields
London WC2A 3LS (GB)**

(56) References cited:
**EP-A- 0 444 738        WO-A-88/00487
AU-A- 1 499 792        AU-A- 6 399 590
GB-A- 2 213 339        GB-A- 2 249 202
US-A- 4 698 781        US-A- 4 812 991
US-A- 4 815 020        US-A- 4 894 655
US-A- 4 973 970        US-A- 5 056 106**

**Description**

FIELD OF THE INVENTION

The present invention relates to distance measurement and, in particular, discloses a method and appears which is used to determine the distance between a variable position and one or more of a number of fixed positions.

BACKGROUND ART

In many fields of endeavour, such as surveying and navigation to name but two, it is necessary to determine distances, preferably quickly, accurately and economically. Hitherto, line of sight distances have been determined using lasers and other optical apparatus which, whilst providing a highly accurate result, are often expensive and cumbersome to use.

One particular example of where known optical devices are poorly adapted for use is where, during the course of a game of golf, it is necessary to determine the distance between the golf ball and the pin position (the "hole"). This is required so that the golf player can choose an appropriate club with which the ball can be struck. It is important that the distance be determined with some level of accuracy in view of the different distances afforded by different clubs.

Typically, a golfer can estimate the distance using his best judgement. This "traditional" method is that internationally accepted by the sport at competition levels, but at non-competitive levels, some players prefer a more accurate method by which their game can be improved. Generally, an accuracy better than 10 metres is required as this, for example, can be the difference in range between a 7 and 8 iron. It is common practice to pace out the distance from the golf ball to the pin on a golf course. This method is very time consuming and frustrating for all players, as it slows down the throughput of the number of players on the course at one time.

US 4,894,655 discloses an aircraft location correction system where satellite position information of an aircraft is received by the aircraft together with satellite error correction data from a base station.

US 5,056,106 discloses a positioning system for use on a golf course which includes a number of refernce location transmitters and a hand held receiver configured to triangulate its position with respect to the transmitters.

It is an object of the present invention to substantially overcome, or ameliorate, some or all problems associated with the prior art.

SUMMARY OF THE INVENTION

In accordance with a first aspect of the present invention there is disclosed a transportable distance calculator comprising:

first receiver means for receiving positioning information from at least one satellite and for determining satellite positioning information of said calculator;
processor means;
second receiver means for real-time reception of error information relating to satellite positioning information derived from said at least one satellite; characterised by
a first memory for retaining fixed position information of one or more fixed positions and wherein said processor means uses said error information to correct said calculator satellite positioning information in real-time and to thereby determine and display a distance between said calculator and a selected one of said fixed positions..

In accordance with a second aspect of the present invention there is disclosed a distance measuring system comprising:

at least one transportable distance calculator of the first aspect; and
a base station comprising:
third receiver means for receiving positioning information from said at least one satellite and for determining satellite positioning information of said base station;
control means for comparing said base station satellite positioning information with a predetermined reference position of said base station to determine said error information in real-time; and
transmitter means for transmitting said error information for reception by said second receiver means of said calculators.

BRIEF DESCRIPTION OF THE DRAWINGS

A number of preferred embodiments of the present invention will now be described with reference to the drawings in which:

Fig. 1 schematically illustrates one hole of a golf course configured with the preferred embodiments;
Fig. 2 is a schematic block diagram representation of one embodiment of the base station of Fig. 1;
Fig. 3 is a schematic block diagram representation of one embodiment of the portable distance calculator of Fig. 1;
Fig. 4 is a schematic block diagram representation of another embodiment of the portable distance calculator of Fig. 1;
Figs. 5 and 6 illustrate various attributes and errors associated with the GPS satellite system;
Fig. 7 is a schematic block diagram representation of another embodiment of the base station of Fig. 1; and
Appendix 1 shows a pseudo-code computer program used to implement the preferred embodiment; and
Appendix 2 is an illustrative example of distance calculation.

BEST AND OTHER MODES FOR CARRYING OUT THE INVENTION

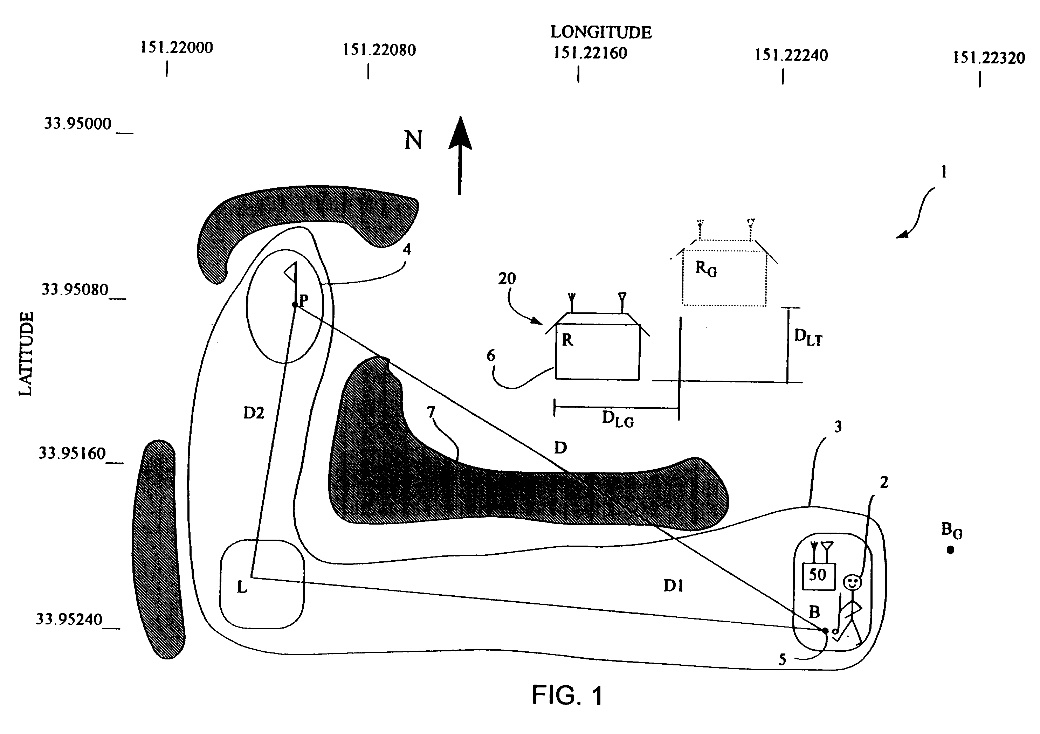

As seen in Fig. 1, a golf course 1 is shown in which a golf player 2 is situated on a fairway 3 and about to "tee off" so as to approach a green 4. The green 4 includes a pin position P which is seen to be at a lineal distance D from a position B of a golf ball 5. Because of the existence of an obstruction 7 (trees, for example), the fairway 3 "dog-legs" at a position L which gives the actual distance to the green 4 being the sum of two distances D1 and D2, as illustrated. The position L marks an area at which the golfer's first stroke is intended to land and for which the distance D1 must be determined.

The golfer 2 is able to calculate the distance D1 using a portable distance calculator 50 which is operated at the location B. The portable distance calculator 50 receives position information from navigational satellites orbiting the earth, as well as data received from a base station 20, which can be arranged at a club house 6. The base station 20 resides at a reference position R whose position on Earth is accurately known from survey data that is obtained by usual survey methods, and which are quite accurate.

There have recently become available satellite position receivers which can provide position information in latitude, longitude and elevation using navigational satellite systems, such as the Global Positioning System (GPS) satellite network. GPS receivers are well known in the art and are typically used for navigation on land and at sea.

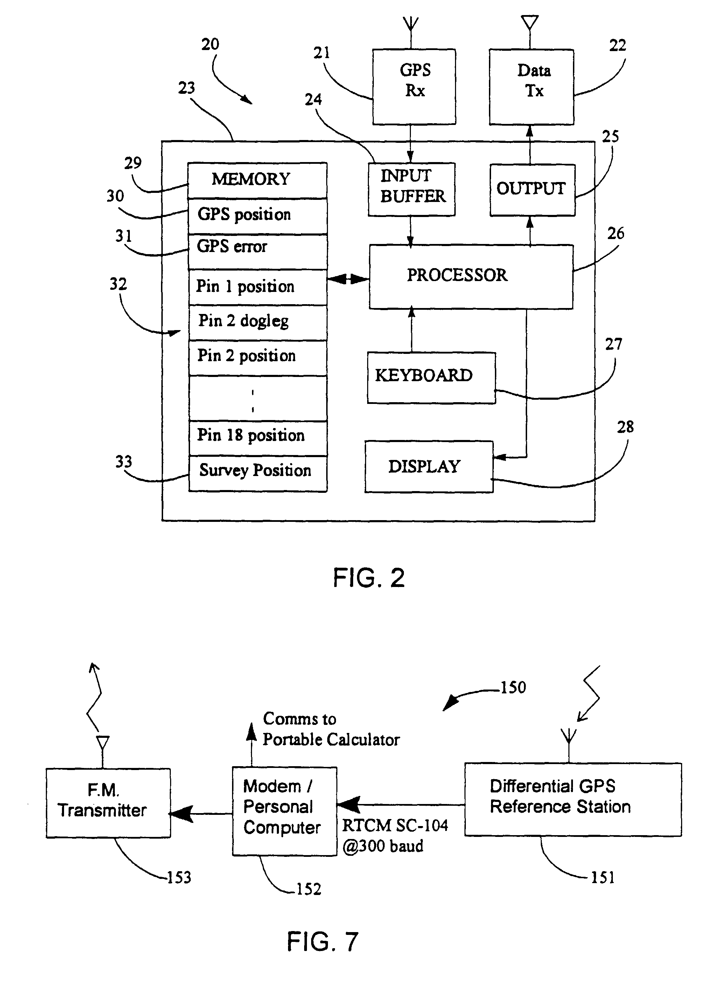

Referring now to Fig. 2, the base station 20 includes a GPS receiver 21 configured at the known reference location R. The GPS receiver 21 supplies GPS position information of the reference location R to a control unit 23. An input buffer 24 of the control unit 23 provides interconnection between the GPS receiver 21 and a controlling processor 26. The control unit 23 also includes a memory unit 29 having a number of memory locations dedicated for specific blocks of data used in the system. The control unit 23 is configured firstly to obtain the GPS position of the reference location R by means of position information output from the GPS receiver 21 and record same in a predetermined memory location 30. The GPS position in the memory location 30 is continually updated and so can vary according to the error in the satellite system at that latitude, longitude and altitude, at that particular time of day. The memory unit 29 is additionally pre-programmed with the actual survey position of the reference location R which is stored in a memory location 33.

Using the survey position 33, and the continually updated GPS position 30, the processor 26 can calculate, and continually update, a GPS differential error 31 indicative of the actual error in the position information received from the GPS receiver 21.

Returning to Fig. 1, a ghost position $R_G$ of the reference location R is shown which represents the GPS position in the memory location 30 provided by the GPS receiver 21. In the example illustrated:

R = 33.95080°S, 151.22160°E, and
$R_G$ = 33.95040°S , 151.22200°E.

This value gives a differential latitude error

$D_{LT}$ = -0.00040°, and a differential longitude error of
$D_{LG}$ = +0.00030°.

These values together form a GPS differential error which is calculated by the processor 26 and stored in a memory location 31.

The control unit 23 is also provided with a input keyboard 27 and a display 28, through which a user can input satellite recorded values of the pin position P and the position L. This information can be programmed into the control unit 23 in several ways. One alternative is a hardware data link, from a hand held data logger including an integral GPS receiver (ie: one of the portable calculators 50), that would be used to obtain the pin position P, and any "dog leg" positions L.

At most golf courses, the actual location on the green of each pin is changed from time to time as determined by the green keeper. Where this occurs, it is necessary for the pin positions 32 recorded in the control unit 23, be updated contemporaneously so that the system can operate accurately. This update can be performed once each pin is repositioned with the new positional data being entered into the control unit 23 and subsequently the calculator 50 prior to the commencement of play.

The base station 20 is configured, using a radio data transmitter 22 to broadcast/transmit data around the golf course indicative of the position of each of the pins and any "dog legs". The GPS differential error 31 is also transmitted so that positional data errors about the golf course can be corrected (to be described). The radio data transmitter 22 can be configured to operate on any useful frequency, such as 173 MHz, and can use any method of modulation suitable for transmitting data, such as frequency modulation (FM).

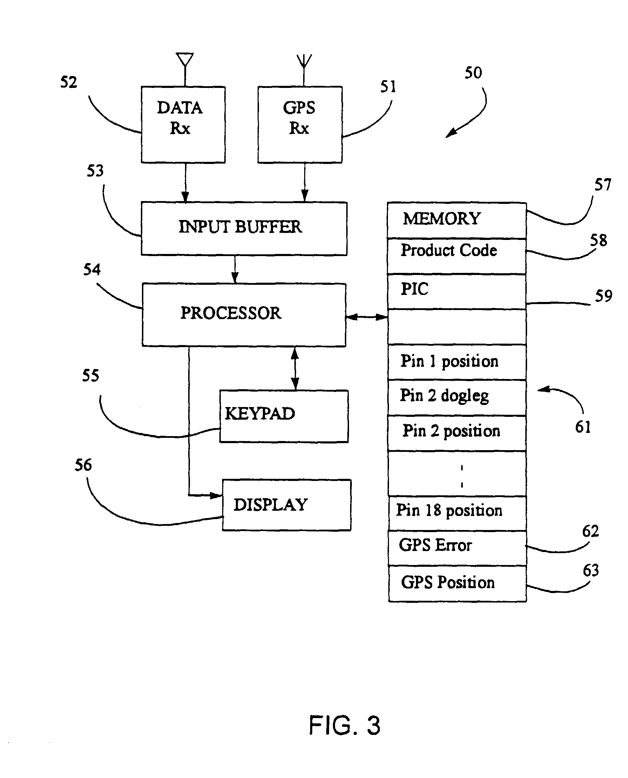

Turning now to Fig. 3, the portable distance calculator 50 includes a radio data receiver 52 adapted to receive signals transmitted from the transmitter 22. Data received by the receiver 52 is supplied to a controlling processor 54 via an input buffer 53. The data received is stored in a memory unit 57 that comprises locations for a product code 58, a personal identification code (PIC) 59, offset error data, pin position data 61, and the GPS differential error 62. The portable distance calculator 50 also includes its own GPS receiver 51 which allows the determination of the GPS position of the current position of the ball 5. In Fig. 1, the GPS position of the ball 5 is the ghost position $B_G$, in a corresponding manner to the GPS position of reference location R being $R_G$. The GPS position $B_G$ of the ball 5 is stored in a memory location 63 in the memory unit 57. In this configuration, the distance calculator 50 can, using a selected pin position 61 (e.g. pin 2 dogleg) and the GPS position $B_G$ of the ball 5, determine the distance D1 between the position B of the ball 5 and the position of the dog leg L. The same procedure can be repeated for each stroke required to reach the golf pin P.

The distances are calculated using trigonometry, and also taking into account the change of longitude grid distances away from the equator. This corrects for the earth's non-spherical shape. The longitude/latitudes are then converted into metres or yards as some players prefer.

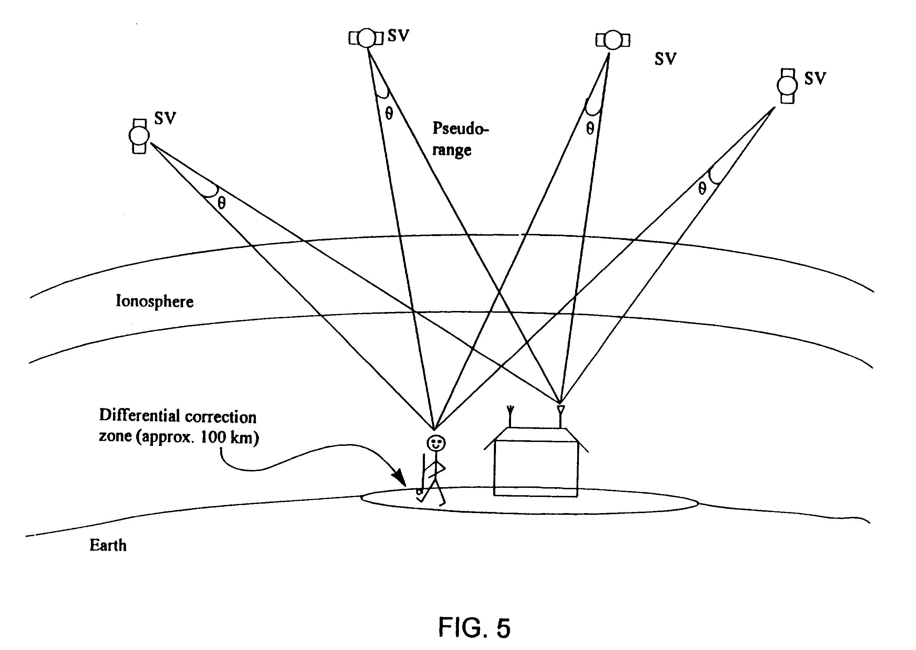

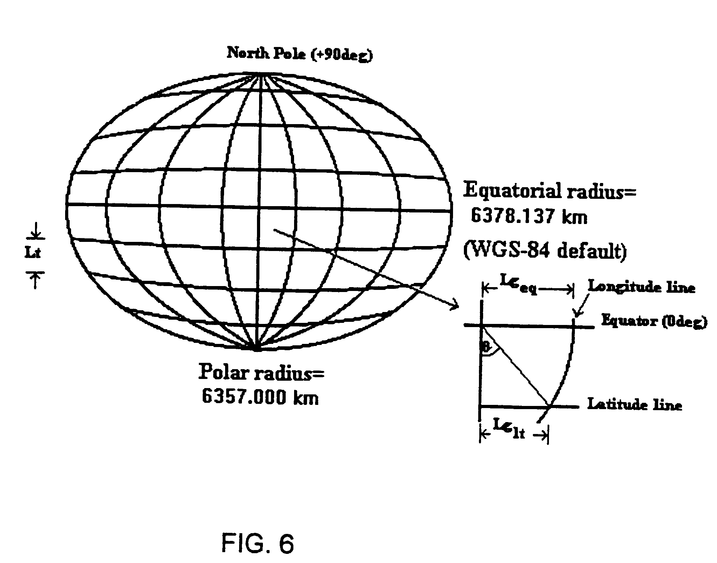

It is necessary to correct for the earths curvature to obtain accurate results. Similarly it is necessary to convert the navigation units into metres (or yards) to give purpose to the distances calculated. The pseudo-code of Appendix 1 shows a simplified version of performing such calculations and Figs. 5 and 6 and the following give a worked example. The diagram of the Earth in Fig. 6., shows that the longitude lines vary in distance apart from zero at the poles to maximum at the equator. The relationship for this is a Cosine function of the latitude, zero degrees being the equator and 90 degrees being the poles.

COS (0 deg)=1　　　COS (90 deg)=0

It is known that the earth is not uniformly circular upon its axis, and in highly accurate navigational situations this would need to be taken into account. However, in the preferred embodiment distances are measured across only relatively short distances, and accordingly any differences encountered are irrelevant. Hence, the use of the WGS-84, World DATUM for the equatorial radius. WGS-84 states the radius at the equator is 6378.137 km. Converting this into metres at the resolution used by the system (0.00001deg).

Longitude metres per 0.00001 degree at the equator.

$$Lgeq =((2*PI*6378137)/360)*0.00001=1.11319 \text{ metres.}$$

The Polar radius is equal to 6357.000km.

Latitude metres per 0.00001 degree.

$$Lt=((2*PI*6357000)/360)*0.00001=1.10951 \text{ metres.}$$

Appendix 2 gives an example of distance calculation based on the above principles.

These are the smallest units used by the system and provide a 2-5 metre accuracy (for 50% of readings) for the system, as a whole.

Bearing calculations are used in determining the direction that the ball was hit, and for the statistical purpose of calculating the distance the ball was "Hooked" or "Sliced" away from the 'ideal' centre of the fairway.

On 25th March 1990, the United States Department of Defence, who operates the GPS satellites, formally implemented Selective Availability (SA). Selective Availability is a method of denying unauthorized, nonmilitary, GPS users high position accuracy with coarse acquisition code (C/A code). The reason behind this is so that they are not supplying the "enemy" with such a useful tool, which could be used against them. However the Department of Defence has stated that the policy of Selective Availability would be reviewed annually in an effort to increase the accuracy available as conditions warrant.

The GPS has a number of errors which need be considered in various applications. Those errors are:

1. Satellite Ephemeris prediction errors;
2. Satellite clock prediction errors;
3. Ionospheric delay errors;
4. Tropospheric delay errors as they appear at the reference station;
5. Artificial errors induced by Selective Availability (SA) techniques;
6. Differential tropospheric delay error, if desired; and
7. Reference station clock offsets.

The first five of these errors are common to both the user 2 and the base station 20, although this commonality is to be reduced (except for clock prediction errors and certain SA errors) as the distance between the user 2 and the base station 20 increases. The last two are provided by the reference station in order for the user to correct for errors that are not in common; the last one only affects the user's ability to determine absolute time.

Accordingly, the differential error message output from the base station 20 provides as its primary correction a number pseudorange corrections. The correction message output from the base station 20 contains data for all the satellites in view of the base (reference) station 20. The pseudorange correction is a predicted correction. It will diverge from the proper correction as it "grows old". Because of this characteristic, the pseudorange correction is preferably updated and transmitted as often as possible. The user equipment preferably updates the corrections accordingly.

A range rate correction is also provided and is designed to compensate for the predicted rate of change of the pseudorange correction. This is an attempt to "extend the life" of the pseudorange correction as it "grows old".

In the illustration of Fig. 1, the GPS receiver 51, in attempting to determine the position B, as stated earlier actually provides the ghost position $B_G$.

Fig.5 shows a representation of the GPS orbiting satellites or space vechicles (SV's), the ionosphere, the reference station and the user. Also shown is a differential zone that can have a radius in the order 100's kilometres or more. Due to the fact that the satellites SV orbit the earth at altitudes of 20,183 km. Pythagoras theorem can be used to determine the angle theta subtended between the user and the reference location. It is apparent that the ratio of a few hundred kilometres to 20,183 km is huge, and for this reason, the GPS specification states that the differential error at any one time is constant for a radius of about 100 km about the location at which the position is measured. Therefore, GPS error 31 obtained at the survey location R is indicative of the error around the entire golf course.

Accordingly, the GPS error 62, comprising $D_{LT}$ and $D_{LG}$, can be used to correct the ghost position $B_G$ to give the actual position B. This is obtained by subtracting the differential error from the measured position. Accordingly, for Fig. 1:

$$B = B_G - (D_{LT}, D_{LG})$$

$$= (33.95200, 151.22310) - (-0.00040, 0.00030).$$

Giving B = 33.95240°S , 151.22280°E

The positional data of P and L can be corrected in a similar manner to give

P = 33.95080°S, 151,22060°E; and
L = 33.95190°S, 151.22030°E.

Using the positions B and L, the first distance D1 can be calculated trigonometrically where the latitude difference is 0.00050° and the longitude difference is 0°00250.

Using the latitude and longitude corrections indicated above, the distance D1 can be calculated as follows:

$$D1 = \sqrt{((50 \times 1.10951)^2 + (250 \times 1.11319)^2)}$$

$$= 278.3 \text{ metres}.$$

The distance D2 is calculated once the ball 5 has landed near the dog-leg.

Because a golf course is small, in a global sense, the GPS error 31 obtained at the survey location R, is indicative of the error around the entire golf course.

Because the golf course is basically a grid on which each of the pins are mapped, any other location can also be stored that can be useful to the player. If the fairway had a dog leg approach to the pin, the ideal dog leg position can also be mapped, so that the distance and bearing to the ideal dog leg can be displayed.

5

Furthermore, it is possible to log any new position and actually calculate the distance at which the last "shot" was hit. This can also be useful for determining an average distance hit for each club, for example.

It is envisaged that the distance calculators 50 are hired either from the golf club or used with the permission of the golf club, having paid some form of user licence. For example, on entering the golf course, the golf player 2 can pay an additional fee for the use of a portable distance calculator 50. Alternatively, if the player 2 has his own calculator 50, an alternative fee can be provided. Upon payment of the fee, the golf player can be provided with a daily personal identification code (PIC) 59 with which the player 2 must enter into the keypad 55 so as to enable use of the data received from the base station 20. The personal identification code entered into the keypad 55 is checked against that received and stored in memory location 59 and if both coincide, the calculation of the distance is permitted. The product code 58 permits use of distance calculators 50 on the golf course 1 where the base station 20 has a corresponding or complementary code. This prevents unlicensed or unauthorized use.

In use, the system shown in Figs. 1 to 3 must permit operation over long periods of time. In this manner, the data transmitter 22 being arranged at a club house or other like location, is configured to transmit continually, so that golf players are not inconvenienced when taking distance measurements. To undertake a distance measurement, the golf player 2 stands over the golf ball 5 and enters the daily personal identification code 59 once at switch on into the keypad 55. The entry of the code wakes the distance calculator 50 from a quiescent, battery power saving state and energizes the GPS receiver 51 and the data receiver 52. When the data receiver 52 detects data transmitted from the transmitter 22, the PIC 59 is initially checked, and if they correspond, the remaining pin position data 61 and GPS error are loaded into the memory 57. When both the pin position 61 and the GPS position 63 are stored in memory 57, the processor 54 indicates, using the display 56 that positional data is available and the golf player need then only enter the particular pin position required. For example, if the golf player is on a hole, pin position 9 is entered. The processor 54 then selects the position of pin 9 and the present GPS position 63, corrects each of those positions using the GPS error 62, and then calculates the distance D between those two positions which is displayed on the display 56. The golf player 2 can then select an appropriate club so as to best cover the distance D.

The preferred embodiment described above can provide a distance measuring accuracy of about 2 to 5 metres or better using both averaging of the GPS receive data and calculation of the differential error.

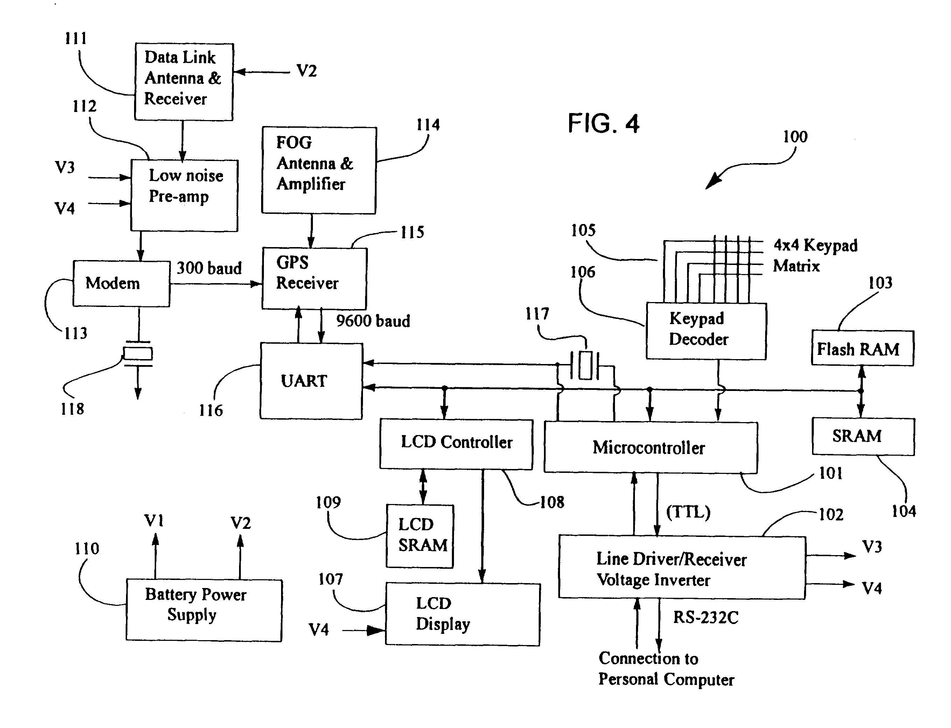

Fig. 4 shows a specific architecture of a portable distance calculator 100, complementing the schematic of Fig. 3, and has a microcontroller 101 which includes a boot EPROM programmed with the pseudo-code of Appendix 1.

A line driver/receiver 102 permits interconnection between the microcontroller 101 and a personal computer thereby permitting direct programming of the pin positions prior to the commencement of play, in which case the personal computer can be configured as the control unit 23. The pin positions are stored in memory comprising Flash RAM 103, such as a memory card, and static RAM 104.

User interface is provided by a keypad matrix 105 having an associated keypad decoder 106, and an LCD display 107, driven via a LCD controller 108 having a dedicated LCD SRAM 109.

The calculator 100 is powered by a battery power supply 110 which outputs two voltages V1 and V2, nominally +5V and +1.5V, respectively.

The V1 supply powers all digital circuitry within the calculator 100. The V2 supply is input into a data link antenna and receiver 111. The line driver/receiver 102 also includes a voltage inverter which creates further supplies V3 and V4 (nominally +10V and -10V respectively). V3 and V4 supply a low noise preamplifier 112 which buffers signals output from the receiver 111 to a modem 113.

GPS signals are detected by a FOG antenna and amplifier 114 which outputs to a GPS receiver 115 which demodulates the received signal to output GPS position data.

The modem 113 and GPS receiver 115 each transmit and receive data to/from the microcontroller via a dual universal asynchronous receiver/transmitter (DUART) 116. Crystals 117 and 188 provide clock signals for the transmission of data to/from and about the calculator 50.

Fig. 7 shows an alternative arrangement of a base station 150 which is configured with a differential GPS reference station 151. The station 151 can be a Trimble Reference Locator II recently manufactured by Trimble Navigation of Sunnyvale, California, U.S.A. The reference station 151 is autonomous device arranged to calculate and transmit differential corrections to mobile GPS receivers. That station 151 has a nine channel architecture which enables it to track and generate precise differential corrections for all GPS satellites in view at any one time. Accordingly, a possible nine different error readings can be transmitted which enables the calculator to select the error corresponding to the satellite from which it receives positional data. Alternatively, an average of the nine errors can be transmitted. The differential corrections are output on an RTCM SC-104 standard format data link to a modem 152 which transfers same to an FM transmitter 153 for broadcasting to the portable calculators 50,100. The GPS receiver 115, when taking positional measurements, obtains data from a number (up to 6) of the GPS satellites and each group of satellite data can then be corrected with corresponding error data obtained via the reference station 151. from the corrected individual satellite data, the actual position is calculated.

It will be apparent from the foregoing that a golf player can readily obtain distance information between any location on the golf course, and any particular pin hole.

For example, the distance calculator 50 can also be used as a personal data base with which a golfer can calculate and compare one's own performance over a particular course. For example, the calculator 50 can be readily adapted to calculate the successive distance to the hole, for example, over a par 5 hole. Additionally, the calculator 50 can be pre-programmed with average distance hits for a particular golfer with specific clubs. In this manner, depending on the distance calculated, the calculator 50 can be used to recommend a particular club suiting the next particular shot to be played. A further modification is to correct for errors in altitude and hence provide more accurate distance measurement over hilly golf courses. It is also possible to incorporate directional bearing information to enable the golfer to determine the direction of the pin relative to his stance, whether or not the pin is visible to the golfer.

Furthermore, because the device 50 is a calculator of sorts, in that it has a keypad and display, it is possible to incorporate into the device an electronic score pad for use during the game, keeping and adding scores as required. Also the LCD display 107, because it is a 2-dimensional pixel array, can be configured as a graphical display with map capabilities for a graphical display of each fairway. Any map data can be supplied directly to the calculator 100 with the pin and dogleg positions via the personal computer connection and into the SRAM 104, or via a memory card operating as the Flash RAM 103.

It will be apparent that the system disclosed herein is not only applicable to short range, line-of-sight distance measurement such as in golf, but can be used in a variety of arts, including bushwalking, for example. Furthermore, the system has ready application to the surveying arts and in particular in the quick and accurate laying out of new markings in a previously survey region, at which one or more base stations can be arranged.

The system also has application in fleet management, for example in creating record of distances travelled from base locations and the spread of vehicular resources.

Other applications include aircraft systems where the present system can be used to supplement outer markers in controlled air space. Also, crop dusting operators can accurately gauge the exact location for such operations thus preventing waste of material and possible damage to adjacent environments.

Furthermore, at an anticipated cost of AS500-$1000 (1992) per calculator, the system represents a cost effective alternative to optical systems without the expense of set-up times of such systems, and their inherent fragility. Accordingly, the present system offers an inexpensive, and easy to use navigation system.

Furthermore, if the calculator 50,100 is used to record the pin and dogleg positions prior to the commencement of play, it is preferred that those positions be error corrected as they are taken, and not when entered into the control unit 23 in the base station 20. This will prevent any change in the error affecting the accuracy of the fixed position data.

## APPENDIX 1

```
/
**************************************************
****
        *                    Pinranger Australia Pty. Ltd.        *
        *                    Golf Distance Measuring system.       *
        *                                                          *
        *                    Written by Tom Gunthorpe.             *
        *                         Copyright 1992                   *
        **************************************************
*******/
        PI    3.1415926535898
        D2R   PI/180.0
        R2D   180.0/PI


        /* Pin location information (sample only) */
        /* Two dimensional array, (18 arrays of 2 elements) */

        /* Degrees in decimal format */
        pin_table[18][2] =
        {{-33.96050,151.22320},{-33.96035,151.22333},
         {-33.96058,151.22363},{-33.95997,151.22457},
         {-33.96070,151.22275},{-33.96000,151.22333},
         {-33.96167,151.22500},{-33.96083,151.22417},
         {-33.96200,151.22583},{-33.96133,151.22667},
         {-33.95833,151.22500},{-33.96167,151.22167},
         {-33.96045,151.22353},{-33.95500,151.22167},
         {-33.95583,151.22417},{-33.95333,151.21833},
         {-33.95167,151.23000},{-33.96050,151.22318}};


        /* Perform mathematical corrections and conversions */
        latlon()
        {
```

```
        lat1 = pin_table[pinnum][0];/* Stored in degrees
*/
        lon1 = pin_table[pinnum][1];
        lat2 = latitude;                       /* Values
from GPS    */
        lon2 = longitude;


    /* Calculate Latitude and Longitude differences in
meters.*/
    /* Longitude difference and corrections */
        a_axis = 6378137.0;             /* WGS84 default */
        londif = (lon1-lon2) * (((a_axis * 2.0 * PI)/360)
* cos(latitude));


    /* Latitude difference */
        p_axis = 6357000.0;             /* The Polar radius
= 6357km */
        latdif = (lat1-lat2) * ((p_axis * 2.0 * PI)/360);
    }


    /* Calculate the Range between the two points */
    /* range = sqrt(((lat1-lat2)^2)+((lon1-lon2)^2)) */

    range(float latdif, float londif)
    {
        rng = sqrt((latdif * latdif) + (londif * londif));
        printl("Range ");
        printd(rng);
        return;                                /* 1 yard
= 0.9144 metres */
    }


    /* Calculate the Bearing from the standing location */
    /* to the Pin, in degrees clockwise from true North. */
```

```
bearing (float latdif, float londif)
{
        if (latdif > 0.0 && londif > 0.0)
                brg = atan(latdif / londif);
        else if (latdif < 0.0 && londif > 0.0)
                brg = atan((latdif / londif) * -1.0 ) +
(PI/2);
        else if (latdif < 0.0 && londif < 0.0)
                brg = atan(latdif / londif) + PI;
        else if (latdif > 0.0 && londif < 0.0)
                brg = atan((latdif / londif) * -1.0 ) -
(PI/2) + PI;

        bg = brg * R2D;                 /* Convert radians
to degrees */
        printl("Bearing  ");
        printd(bg);
    return;
    }
```

APPENDIX 2

First co-ordinates: lat -33.96045
lon 151.22353

Second co-ordinatges: lat -33.95853
lon 151.22789

$$\text{abs delta lat} = -33.96045 - -33.95985$$

$$= 0.00060 * 10000$$

$$= 60$$

$$\text{abs delta lon} = 151.22353 - 151.22412$$

$$= 0.00059 * 10000$$

$$= 59$$

Longitudinal convertion to metres.

$$Lg_{lt} = COS(lat) * Lg_{eq}$$

$$= COS(33.96) * 1.11319$$

$$= 0.8294277 * 1.11319$$

$$= 0.92331$$

$$\text{delta lat(metres)} = 60 * 1.10951$$

$$= 66.5706 \text{metres}$$

$$\text{delta long(metres)} = 59 * 0.92331$$

$$= 54.47529 \text{metres}$$

$$\text{distance between two points} = SQR(((\text{delta lat})^2)+((\text{delta lon})^2)$$

$$= SQR(((66.5706)^2) + ((54.47529)^2))$$

$$= 86.02 \text{ metres}$$

**Claims**

1. A transportable distance calculator (50) comprising:

first receiver means (51) for receiving positioning information from at least one satellite (SV) and for determining satellite positioning information of said calculator;
processor means (53-56);
second receiver means (52) for real-time reception of error information ($D_{LT}$,$D_{LA}$) relating to satellite positioning information derived from said at least one satellite;

characterised by

a first memory (61,62,63) for retaining fixed position information (61) of one or more fixed positions (L,P) and wherein said processor means uses said error information to correct said calculator satellite positioning information in real-time and to thereby determine and display a distance between said calculator and a selected one of said fixed positions.

2. A calculator as claimed in claim 1, characterised in that said calculator further determines and displays a bearing from said calculator to said selected one fixed position.

3. A calculator as claimed in claim 1 or 2, characterised in that said calculator is configured in a unitary hand-held portable form.

4. A calculator as claimed in claims 1, 2 or 3 characterised in that said processor means comprises a processor (54) connected to a keypad input (55) operable by a user of said calculator, and a display (56) connected to said processor for displaying at least said distance, said processor being interconnected to each of said first receiver means, said second receiver means, and said first memory.

5. A calculator as claimed in claim 4, characterised in that said display comprises a 2-dimensional pixel array and said first memory is provided with map data including said fixed positions and encompassing areas at which said calculator can be positioned to thereby enable visual display to the user of the relative relationship between the position of said calculator and any one or more of said fixed positions.

6. A calculator as claimed in claim 4 or 5, characterised in that said fixed positions are positions about a golf course (1) and said calculator is operable at a golf ball (5) position on said golf course whereby the lineal distance (D1) between the golf ball and a selected one of said positions is determined and substantially instantaneously displayed on said display to a user of said calculator.

7. A calculator as claimed in claim 6, characterised in that having determined said distance, said calculator indicates to the user a particular golf club that should be selected for a next stroke of the golf ball to approach a selected one of said fixed positions.

8. A calculator as claimed in claim 6 or 7, characterised in that said fixed positions are pin hole (P) and dog-leg (L) positions about said golf course.

9. A distance measuring system comprising:

at least one transportable distance calculator (50) as claimed in any one of claims 1 to 8; and
a base station (20) comprising:

third receiver means (21) for receiving positioning information from said at least one satellite (SV) and for determining satellite positioning information (30) of said base station;
control means (26) for comparing said base station satellite positioning information with a predetermined reference position (33) of said base station to determine said error information (31) in real-time; and
transmitter means (22,153) for transmitting said error information for reception by said second receiver means (52) of said calculators.

10. A system as claimed in claim 9, characterised in that said control means comprises a second memory (29) for retaining said fixed position information and a communication means (152) for transferring said fixed position information to said calculators.

11. A system as claimed in claim 10, characterised in that said communication means comprises a hardware interconnection port connectable to a complementary port of one of said calculators for direct transfer of said fixed position information.

12. A system as claimed in claim 10 or 11, characterised in that said communication means interconnects said second memory with said transmitter means for transmission of said fixed position information to said calculators.

13. A system as claimed in any one of claims 9 to 12, characterised in that said fixed position information comprises survey data of one or more of said fixed positions.

14. A system as claimed in any one of claims 9 to 13, characterised in that said fixed position information is determined by operating one of said calculators at one or more said fixed positions, and simultaneously error correcting said fixed positions with said error information prior to storing said fixed positions in said first memory from which it can be transferred to said control means.

15. A system as claimed in claim 14, characterised in that said fixed positions are transferred by displaying said fixed position information on said calculator and manually entering same into said control means.

16. A system as claimed in any one of claims 9 to 15, characterised in that said transmitter means and said receiver means utilize radio frequency communication from said base station to said calculator.

17. A system as claimed in any one of claims 9 to 16, characterised in that said third receiver means is configured to simultaneously receive satellite positioning information from a plurality of satellites from which said control means can thereby determine a like plurality of said error information which is thereby transferable to said calculator for correcting said calculator satellite positioning information obtained from the corresponding one of said satellites.

**Patentansprüche**

1. Transportabler Entfernungsrechner (50), welcher umfaßt:

   erste Empfangsmittel (51) zum Empfangen von Positionsinformationen von zumindest einem Satelliten (SV) und zum Bestimmen von Satellitenpositionsinformationen des Rechners;

   Bearbeitungsmittel (53-56);

   zweite Empfangsmittel (52) zum Echtzeit-Empfang von Fehlerinformationen ($D_{LT}$, $D_{LA}$), welche sich auf Satellitenpositionsinformationen beziehen, welche von dem zumindest einen Satelliten erhalten werden;

   *gekennzeichnet durch*

   einen ersten Speicher (61, 62, 63) zum Halten von Festpositionsinformationen (61) von einer oder mehreren festen Positionen (L, P), wobei die Bearbeitungsmittel die Fehlerinformationen verwenden, um die Rechnersatelliteninformationspositionen in Echtzeit zu korrigieren und dadurch eine Entfernung zwischen dem Rechner und einer aus den festen Positionen ausgewählten Position zu ermitteln und anzuzeigen.

2. Rechner nach Anspruch 1,
   *dadurch gekennzeichnet,*
   daß der Rechner weiterhin die Lage des Rechners relativ zu der ausgewählten festen Position ermittelt und anzeigt.

3. Rechner nach Anspruch 1 oder 2,
   *dadurch gekennzeichnet,*
   daß der Rechner in einer kompakten, manuell bewegbaren Form ausgeführt ist.

4. Rechner nach Anspruch 1, 2 oder 3,
   *dadurch gekennzeichnet,*
   daß die Bearbeitungsmittel einen Prozessor (54) umfassen, welcher mit einer Tastatureingabe (55) verbunden ist, die durch einen Benutzer des Rechners bedienbar ist, und eine Anzeige (56), welche mit dem Prozessor verbunden ist zum Anzeigen von zumindest diesem Abstand, wobei der Prozessor jeweils mit dem ersten Empfangsmittel, dem zweiten Empfangsmittel und dem ersten Speicher verbunden ist.

5. Rechner nach Anspruch 4,
**dadurch gekennzeichnet,**
daß die Anzeige ein zweidimensionales Pixelfeld umfaßt, und der erste Speicher mit Kartendaten versehen ist, welche feste Positionen umfassen und Flächen umspannen, innerhalb welcher der Rechner positioniert werden kann, um hierdurch für den Benutzer eine visuelle Anzeige bezüglich der relativen Anordnung zwischen der Position des Rechners und einer oder mehrerer fester Positionen zu ermöglichen.

6. Rechner nach Anspruch 4 oder 5,
**dadurch gekennzeichnet,**
daß diese festen Positionen Positionen auf einem Golfkurs (1) sind, und der Rechner an einer Golfballposition (5) auf dem Golfkurs betreibbar ist, wobei der geradlinige Abstand (1) zwischen dem Golfball und einer der ausgewählten Positionen ermittelt wird, und auf der Anzeige für einen Benutzer des Rechners im wesentlichen ohne Verzögerung angezeigt wird.

7. Rechner nach Anspruch 6,
**dadurch gekennzeichnet,**
daß, nachdem der Abstand ermittelt worden ist, der Rechner dem Benutzer anzeigt, daß ein bestimmter Golfschläger für den nächsten Schlag des Golfballs verwendet werden sollte, um eine ausgewählte Position der festen Positionen zu erreichen.

8. Rechner nach Anspruch 6 oder 7,
**dadurch gekennzeichnet,**
daß die festen Positionen "pin-hole-" (P) und "dog-leg-Positionen" (L) auf dem Golfkurs sind.

9. Ein Entfernungsmeßsystem, welches umfaßt:

zumindest einen transportablen Entfernungsrechner (50) nach einem der Ansprüche 1 bis 8 und

eine Basisstation (20), welche umfaßt:

dritte Empfangsmittel (21) zum Empfangen von Positionsinformationen von zumindest dem einen Satelliten (SV) und zum Bestimmen von Satellitenpositionsinformationen (30) der Basisstation;

Steuermittel (26) zum Vergleichen der Satellitenpositionsinformationen der Basisstation mit einer vorbestimmten Referenzposition (30) der Basisstation, um die Fehlerinformationen (31) in Echtzeit zu ermitteln; und

Sendemittel (22, 153) zum Senden der Fehlerinformationen, welche zum Empfang durch die zweiten Empfangsmittel (52) der Rechner bestimmt sind.

10. Ein System nach Anspruch 9,
**dadurch gekennzeichnet,**
daß die Steuermittel einen zweiten Speicher (29) umfassen, zum Festhalten der Festpositionsinformationen und Kommunikationsmittel (152) zum Übertragen der Festpositionsinformationen auf die Rechner.

11. Ein System nach Anspruch 10,
**dadurch gekennzeichnet,**
daß die Kommunikationsmittel eine Hardware-Schnittstelle umfassen, welche verbindbar ist mit einem dazu komplementären Port von zumindest einem der Rechner und der direkten Übertragung der Festpositionsinformationen dient.

12. System nach Anspruch 10 oder 11,
**dadurch gekennzeichnet,**
daß die Kommunikationsmittel den zweiten Speicher mit dem Sendemittel verbinden, um die Festpositionsinformationen auf die Rechner zu übertragen.

**EP 0 617 794 B1**

**13.** System nach einem der Ansprüche 9 bis 12,
**dadurch gekennzeichnet,**
daß die Festpositionsinformationen Vermessungsdaten von zumindest einer der festen Positionen umfaßt.

**14.** System nach einem der Ansprüche 9 bis 13,
**dadurch gekennzeichnet,**
daß die Festpositionsinformationen durch Betreiben eines der Rechner an einer oder mehrerer der festen Positionen ermittelt werden, und dadurch daß gleichzeitig Fehler an den festen Positionen mit den Fehlerinformationen korrigiert werden, bevor die festen Positionen in den ersten Speicher gespeichert werden, von wo sie auf die Steuermittel übertragen werden können.

**15.** System nach Anspruch 14,
**dadurch gekennzeichnet,**
daß die festen Positionen durch Anzeigen der Festpositionsinformationen auf dem Rechner und manuelles Eingeben derselben in die Steuermittel übertragen werden.

**16.** System nach einem der Ansprüche 9 bis 15,
**dadurch gekennzeichnet,**
daß die Übertragungsmittel und die Empfangsmittel eine radiowellengestützte Übertragung zwischen der Basisstation und dem Rechner anwenden.

**17.** System nach einem der Ansprüche 9 bis 16,
**dadurch gekennzeichnet,**
daß die dritten Empfangsmittel so ausgelegt sind, daß sie gleichzeitig von einer Vielzahl von Satelliten Satellitenpositionsinformationen empfangen, aus welchen die Steuermittel sodann eine entsprechende Vielzahl von Fehlerinformationen ermitteln können, welche hierdurch auf den Rechner zum Korrigieren der Rechnersatellitenpositionsinformationen übertragbar werden, die von dem entsprechenden Satelliten empfangen worden sind.

**Revendications**

**1.** Calculateur de distance transportable (50) comprenant :

des premiers moyens récepteurs (51) pour recevoir des informations de positionnement à partir d'au moins un satellite (SV) et pour déterminer des informations de position satellite dudit calculateur;

des moyens formant processeur (53-56);

des second moyens récepteurs (52) pour effectuer une réception en temps réel d'informations d'erreur (DLT, DLA) concernant des informations de position satellite provenant dudit au moins un satellite, caractérisé par

une première mémoire (61, 62, 63) prévue pour maintenir des informations de position fixe (61) d'une ou plusieurs positions fixes (L, P) et dans lequel lesdits moyens formant processeur utilisent lesdites informations d'erreur pour corriger lesdites informations de position satellite de calculateur en temps réel et pour déterminer et afficher de ce fait une distance entre ledit calculateur et une position sélectionnée parmi lesdites positions fixes.

**2.** Calculateur selon la revendication 1, caractérisé par le fait que ledit calculateur détermine en outre et affiche un gisement à partir dudit calculateur pour ladite position fixe sélectionnée.

**3.** Calculateur selon la revendication 1 ou 2, caractérisé par le fait que ledit calculateur est configuré sous une forme monobloc portable manuellement.

**4.** Calculateur selon les revendications 1, 2 ou 3, caractérisé par le fait que lesdits moyens formant processeur comprennent un processeur (54) relié à une entrée de clavier (55) actionnable par un utilisateur dudit calculateur, et un affichage (56) relié audit processeur pour afficher au moins ladite distance, ledit processeur étant interconnecté à chacun desdits premiers moyens récepteurs, desdits seconds moyens récepteurs et de ladite première mémoire.

**15**

**5.** Calculateur selon la revendication 4, caractérisé par le fait que ledit affichage comprend une matrice de pixels bidimentionnelle et ladite première mémoire est pourvue de données de carte comprenant lesdites positions fixes et contenant des zones sur lesquelles ledit calculateur peut être placé pour permettre de ce fait un affichage visuel à l'utilisateur de la relation relative entre la position dudit calculateur et l'une quelconque, ou plus, desdites positions fixes.

**6.** Calculateur selon la revendication 4 ou 5, caractérisé par le fait que lesdites positions fixes sont des positions autour d'un parcours de golf (1) et ledit calculateur est actionnable sur une position de balle de golf (5) sur ledit parcours de golf, de manière que la distance rectiligne (D1) entre la balle de golf et une position sélectionnée parmi lesdits positions soit déterminée et affichée sensiblement instantanément sur ledit affichage à un utilisateur dudit calculateur.

**7.** Calculateur selon la revendication 6, caractérisé par le fait que, après avoir déterminé ladite distance, ledit calculateur indique à l'utilisateur un club de golf particulier qui doit être sélectionné pour un nouveau parcours de la balle de golf, afin de se rapprocher d'une position sélectionnée parmi lesdites positions fixes.

**8.** Calculateur selon la revendication 6 ou 7, caractérisé par le fait que lesdites positions fixes sont des positions de petits trous (P) et de coins (L) autour dudit parcours de golf.

**9.** Système de mesure de distance comprenant :

au moins un calculateur de distance transportable (50) selon l'une quelconque des revendications 1 à 8; et

un poste de base (20) comprenant :

des troisièmes moyens récepteurs (21) pour recevoir des informations de positionnement à partir dudit au moins un satellite (SV) et pour déterminer des informations de position satellite (30) dudit poste de base;

des moyens de commande (26) pour comparer lesdites informations de position satellite de poste de base à une position de référence (33) prédéterminée dudit poste de base, pour déterminer lesdites informations d'erreur (31) en temps réel, et

des moyens émetteurs (22, 153) pour émettre lesdites informations d'erreur pour qu'elles soient reçues par lesdits deuxièmes moyens récepteurs (52) desdits calculateurs.

**10.** Système selon la revendication 9, caractérisé par le fait que lesdits moyens de commande comprennent une deuxième mémoire (29) pour retenir lesdites informations de position fixe et des moyens de communication (152) pour transférer lesdites informations de position fixe auxdits calculateurs.

**11.** Système selon la revendication 10, caractérisé par le fait que lesdits moyens de communication comprennent un port d'interconnexion de matériel susceptible d'être connecté à un port complémentaire de l'un desdits calculateurs pour un transfert direct desdites informations de position fixe.

**12.** Système selon la revendication 10 ou 11, caractérisé par le fait que lesdits moyens de communication relient entre eux ladite deuxième mémoire et lesdits moyens émetteurs pour l'émission desdites informations de position fixe auxdits calculateurs.

**13.** Système selon l'une quelconque des revendications 9 à 12, caractérisé par le fait que lesdites informations de position fixe comprennent des données de surveillance d'une ou plusieurs desdites positions fixes.

**14.** Système selon l'une quelconque des revendications 9 à 13, caractérisé par le fait que lesdites informations de position fixe sont déterminées par l'actionnement de l'un desdits calculateurs dans une ou plusieurs desdites positions fixes et la correction d'erreur simultanée des positions fixes avec lesdites informations d'erreur, avant de stocker lesdites positions fixes dans la première mémoire à partir de laquelle elle peut être transférée aux moyens de commande.

**15.** Système selon la revendication 14, caractérisé par le fait que lesdites positions fixes sont transférées par un affichage desdites informations de positions fixes sur ledit calculateur et une entrée manuelle de cette dernière dans lesdits moyens de commande.

16. Système selon l'une quelconque des revendications 9 à 15, caractérisé par le fait que lesdits moyens émetteurs et lesdits moyens récepteurs utilisent une communication à fréquence radio depuis ledit poste de base jusqu'au calculateur.

17. Système selon l'une quelconque des revendications 9 à 16, caractérisé par le fait que lesdits troisième moyens récepteurs sont configurés pour recevoir simultanément des informations de position satellite à partir d'une pluralité de satellites depuis lesquels lesdits moyens de commande peuvent déterminer de ce fait une pluralité analogue desdites informations d'erreur qui est de ce fait transférable audit calculateur pour corriger lesdites informations de position satellite de calculateur obtenues à partir du satellite correspondant parmi lesdits satellites.

FIG. 1

MEMORY

GPS position

GPS error

Pin 1 position

Pin 2 dogleg

Pin 2 position

Pin 18 position

Survey Position

GPS Rx

Data Tx

INPUT BUFFER

OUTPUT

PROCESSOR

KEYBOARD

DISPLAY

FIG. 2

Comms to Portable Calculator

F.M. Transmitter

Modem / Personal Computer

RTCM SC-104 @300 baud

Differential GPS Reference Station

FIG. 7

19

FIG. 3

FIG. 4

EP 0 617 794 B1

**FIG. 5**

**North Pole (+90deg)**

Equatorial radius=
6378.137 km

(WGS-84 default)

$L\varkappa_{eq}$ — Longitude line

Equator (0deg)

Latitude line

$L\varkappa_{lt}$

Polar radius=
6357.000 km

Lt

FIG. 6